Europäisches Patentamt

European Patent Office

Office européen des brevets

(11) Veröffentlichungsnummer: **0 132 527**
**B1**

(12) # EUROPÄISCHE PATENTSCHRIFT

(45) Veröffentlichungstag der Patentschrift:
08.04.87

(21) Anmeldenummer: 84105504.9

(22) Anmeldetag: 15.05.84

(51) Int. Cl.⁴: **G 01 B 7/315,** G 01 B 17/00

(54) Vorrichtung zur Vermessung der Radebenen von Kraftfahrzeugen.

(30) Priorität: 29.06.83 DE 3323367

(43) Veröffentlichungstag der Anmeldung:
13.02.85 Patentblatt 85/7

(45) Bekanntmachung des Hinweises auf die Patenterteilung:
08.04.87 Patentblatt 87/15

(84) Benannte Vertragsstaaten:
CH DE FR GB IT LI NL SE

(56) Entgegenhaltungen:
EP-A-0 098 920
DE-A-2 236 693
DE-A-2 358 313
DE-B-1 473 800
US-A-4 099 333

(73) Patentinhaber: Wegmann & Co. GmbH, August-
Bode- Strasse 1, D-3500 Kassel (DE)

(72) Erfinder: Schrammen, Peter, Dr. Dipl.- Phys.,
Korbacher Strasse 247, D-3500 Kassel (DE)
Erfinder: Schürg, Bernd, Dipl.- Ing.,
Herkulesstrasse 11, D-3500 Kassel (DE)
Erfinder: Wagner, Johann, Dr.- Ing., Händelstrasse
29, D-3502 Vellmar (DE)
Erfinder: Gieland, Horst, Weserstrasse 11 b, D-3500
Kassel (DE)

(74) Vertreter: Feder, Heinz, Dr., Dominikanerstrasse
37, D-4000 Düsseldorf 11 (DE)

## Beschreibung

Die Erfindung betrifft eine Vorrichtung zur Vermessung der Radebenen von Kraftfahrzeugen während der Drehung des Rades durch Messung des Abstandes eines oder mehrerer radfester Punkte von einer prüfstandsfesten Referenz und zur Vermessung der Änderung der Radebene bei Spur- bzw. Sturzeinstellung durch Messung der Abstände mehrerer radfester Punkte von einer prüfstandsfesten Referenz, bei der die Abstandsmessung berührungslos durch Ultraschall erfolgt und bei der Schallsender und/oder Schallempfänger an einem Meßkopfhalter angeordnet sind, der auf das Rad aufsetzbar ist und der über eine Koppelvorrichtung an einem axial verschiebbaren Arm schwenkbar angeordnet ist.

Eine derartige Vorrichtung ist in dem Dokument EP-A-0 098 920 (Priorität 10.7.82; Veröffentlichung 25.01.84) beschrieben.

Die der Erfindung zugrunde liegende Aufgabe bestand darin, die Ankopplung des Meßkopfhalters an das zu vermessende Rad einerseits und an den axial verschiebbaren Arm andererseits so auszubilden, daß der Meßkopfhalter bei einer Drehung des zu vermessenden Rades alle bei der Raddrehung auftretenden Schwenkbewegungen der Radebenen sowie parallel zur Radebene verlaufende Bewegungen, die beispielsweise durch zur Radachse exzentrisches Aufsetzen des Meßkopfhalters verursacht sein können, unbehindert ausführen kann, so daß eine exakte Vermessung der Radebene in verschiedenen Stellungen des Rades in einfacher Weise durchgeführt werden kann, wobei, wie beim Gegenstand der älteren Vorrichtung, die Messungen in einem Rechner ausgewertet werden kännen.

Eine erste Lösung dieser Aufgabe ist erfindungsgemäß durch die Merkmale aus dem kennzeichnenden Teil des Patentanspruchs 1 gegeben.

Bei dieser Lösung rotiert der Meßkopfhalter zusammen mit dem Rad und durch die besondere Ausbildung der Koppelvorrichtung ist dafür gesorgt, dsß der Meßkopfhalter außer der Rotationsbewegung auch Schwenkbewegungen, Bewegungen parallel zur Radebene und axiale Bewegungen ausführen kann.

Eine zweite, auf dem gleichen Lösungsprinzip beruhende Lösung ist erfindungsgemäß durch die Merkmale aus dem kennzeichnenden Teil des Patentanspruchs 2 gegeben.

Bei dieser Lösung rotiert der Meßkopfhalter nicht mit dem Rad und durch die Ausbildung der Koppelvorrichtung ist dafür gesorgt, daß er dennoch Schwenkbewegungen und Bewegungen parallel zur Radebene innerhalb gewisser Grenzen ausführen kann.

Vorteilhafte Ausführungsformen der beiden Lösungen sind in den abhängigen Ansprüchen beschrieben.

Selbstverständlich sind alle in der obengenannten älteren Anmeldung beschriebenen vorteilhaften Ausführungsformen mit dem Gegenstand und den Ausführungsformen der vorliegenden Erfindung kombinierbar und führen zu vorteilhaften Ausführungsformen der Erfindung.

So sind insbesondere die Ausführungsformen der älteren Vorrichtung, wonach entweder die prüfstandsfeste Referenz aus einem oder mehreren in einer geeigneten Aufnahme sitzenden Schallempfängern besteht und am Rad Schallsender angeordnet sind, oder die prüfstandsfeste Referenz eine schallreflektierende Wand ist und am Rad Schallsender und Schallempfänger angeordnet sind, auch im Zusammenhang mit den Merkmalen der vorliegenden Erfindung verwirklichbar.

Wie schon in der älteren Anmeldung beschrieben und weiter unten anhand der Ausführungsbeispiele näher erläutert, kommt es auch beim Gegenstand der Erfindung nicht darauf an, daß die radfesten Punkte, deren Abstand von einer prüfstandsfesten Referenz gemessen wird, Punkte des Rades selbst sind. Es genügt vielmehr, daß sie in einer festen Beziehung zur Radebene stehen, die aber nicht notwendig bekannt zu sein braucht, wenn das Rad bei der Messung gedreht und in mehreren Stellungen des Rades Abstandsmessungen durchgeführt werden. Hierbei brauchen, wie in einem Ausführungsbeispiel weiter unten erläutert, die am Meßkopfhalter angeordneten Schallsender oder Schallsender- empfänger nicht unbedingt mit dem Rad mitrotieren.

Im folgenden werden anhand der beigefügten Zeichnungen das Grundprinzip der Vorrichtung zur Vermessung der Radebenen von Kraftfahrzeugen noch einmal erläutert und zwei Ausführungsbeispiele näher beschrieben.

Fig. 1 zeigt in einer perspektivischen schematischen Darstellung eine Vorrichtung zur Vermessung der Radebenen an Kraftfahrzeugen, bei der als prüfstandsfeste Referenz Schallempfänger dienen;

Fig. 2 zeigt in einer Darstellung analog Fig. 1 eine Vorrichtung, bei der als prüfstandsfeste Referenz eine schallreflektierende Wand dient;

Fig. 3 ist ein vertikaler Teilschnitt durch eine erste Variante einer Vorrichtung nach Fig. 1;

Fig. 4 ist ein vertikaler Teilschnitt durch eine zweite Variante der Vorrichtung nach Fig. 1;

Fig. 5 ist eine schematische Teildarstellung der Vorrichtung nach Fig. 3 zur Erläuterung des Meßverfahrens.

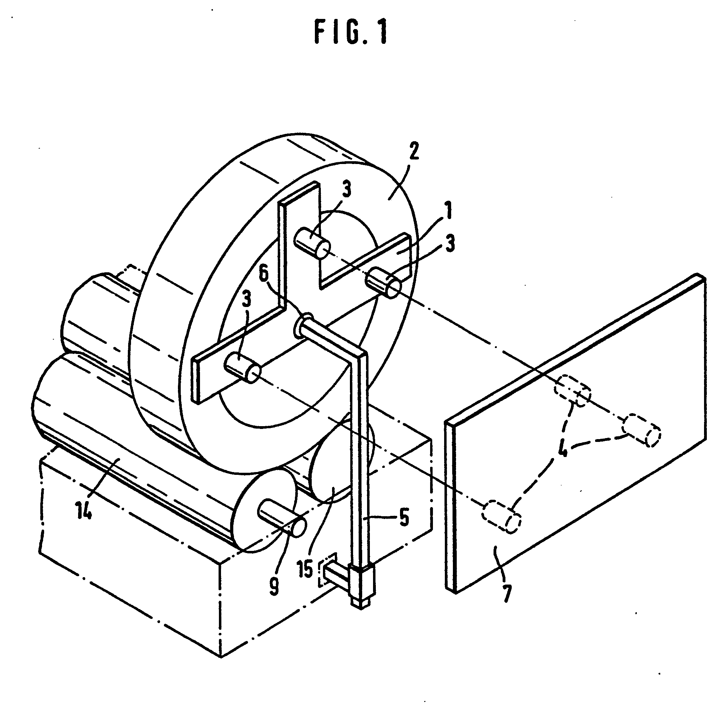

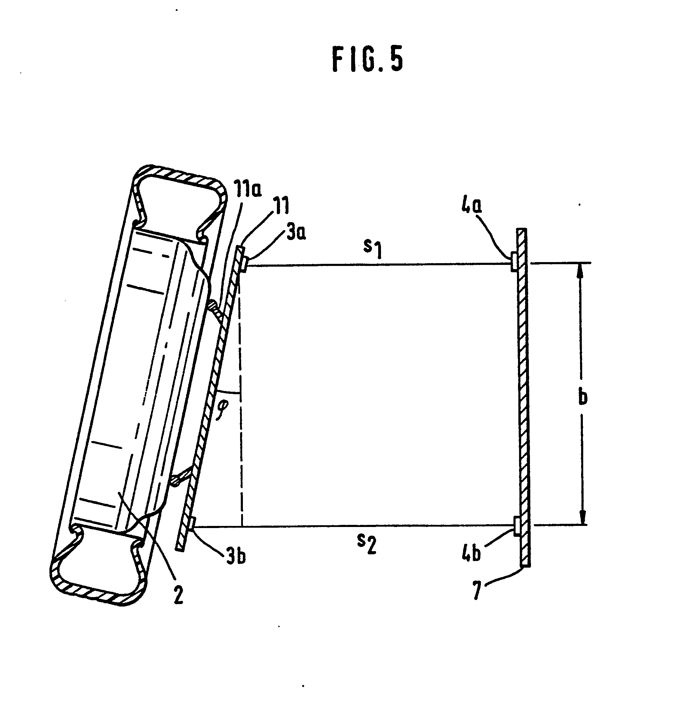

Bei der Vorrichtung nach Fig. 1 ist am Rad 2 ein Meßkopfhalter 1 angeordnet. Der Meßkopfhalter ist über eine Koppelvorrichtung 6 an einem axial bewegbaren Arm 5 so befestigt, daß er, wie weiter unten ausführlicher beschrieben, während der Messung drehbar, schwenkbar und gegebenenfalls in axialer Richtung verschiebbar ist, und zwar so, daß durch den Arm 5 der Meßkopfhalter 1 nicht behindert ist und allen Bewegungen des Rades folgen kann. Am Meßkopfhalter 1 sind Ultraschallaender 3 angeordnet. Als prüfstandsfeste Referenz dienen an einer Halterungsplatte 7 angeordnete Ultraschallempfänger 4, von denen die von den Ultraschallsender 3 ausgesandten Ultraschallsignale aufgenommen werden. Das genaue Meßverfahren wird weiter unten anhand von Fig. 5 erläutert. Zur Bestimmung der Radebene wird das Rad 2 zwischen aufeinanderfolgenden Messungen gedreht. Zu diesem Zweck ist eine Vorrichtung vorgesehen, die aus einer Antriebsrolle 14 und einer Um-2lenkrolle 15 besteht, durch deren Drehung das Rad 2 gedreht werden kann. Ein Winkelgeber 9 erfaßt den zugehörigen Drehwinkel.

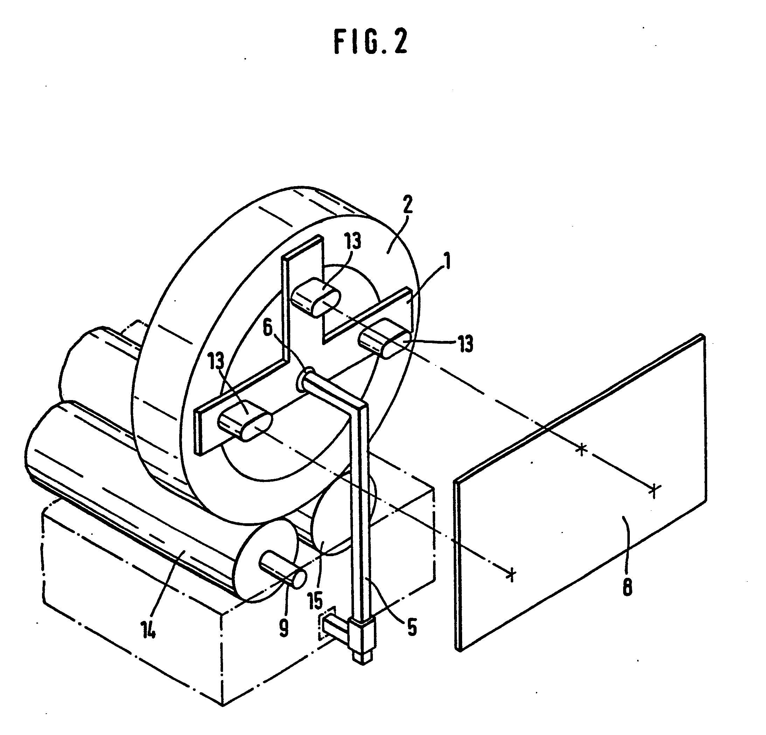

Bei der Ausführungsform nach Fig. 2 sind gleiche Teile mit gleichen Bezugsziffern bezeichnet. Der Unterschied dieser Ausführungsform zur Ausführungsform nach Fig. 1 besteht darin, daß am Meßkopfhalter 1 Vorrichtungen 13 angeordnet sind, die gleichzeitig Schallsender und Schallempfänger sind und als prüfstandsfeste Referenz dient eine schallreflektierende Wand B. Die Messung kann mit dieser Vorrichtung in gleicher Weise durchgeführt werden wie mit der Vorrichtung nach Fig. 1 mit dem Unterschied, daß die von den Empfängern gemessenen Signale den doppelten Abständen entsprechen.

Die berührungslose Messung mittels Ultraschall hat nicht nur den Vorteil, daß die Messung kräftefrei erfolgt, sondern hat den weiteren Vorteil, daß die Messung auch bei größeren Radeinschlagwinkeln exakt durchgeführt werden kann, wobei der Einschlagwinkel ebenfalls an den Rechner gemeldet und von diesem rechnerisch berücksichtigt werden kann.

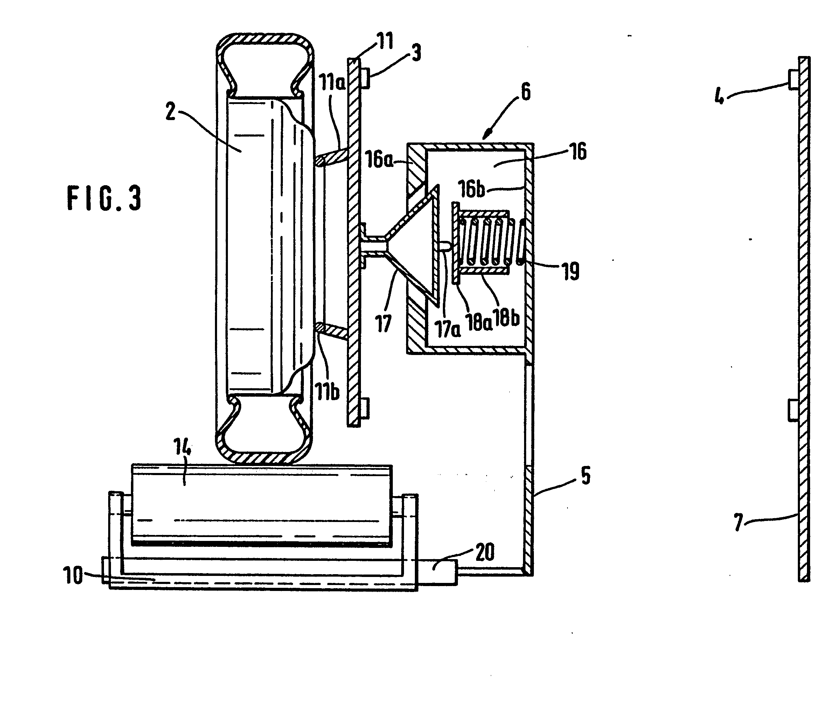

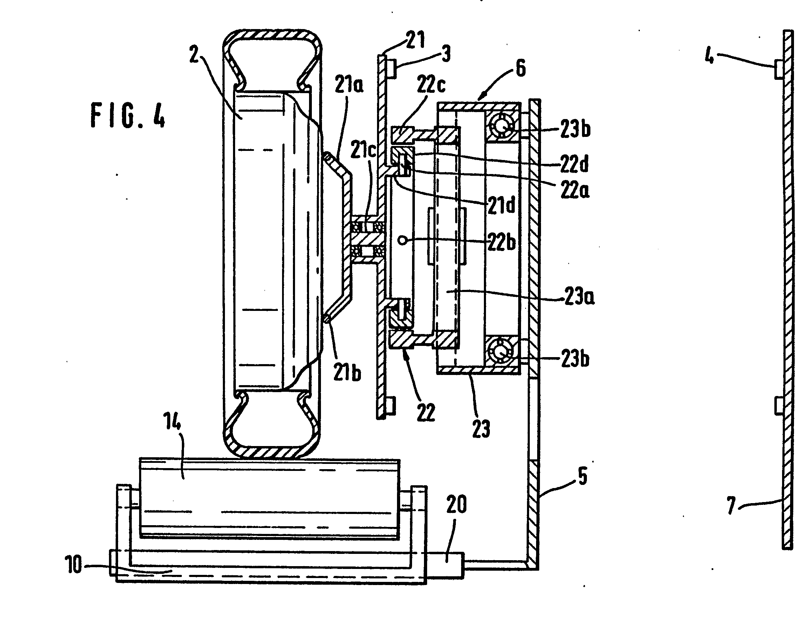

Wichtig ist, daß der mit dem Rad 2 verbundene Meßkopfhalter 1 den Bewegungen der Radebene so folgen kann, daß aus den gemessenen Abständen die Lage der Radebene exakt bestimmt werden kann. Hierzu sind die Anordnung des Meßkopfhalters 1 am Rad 2 sowie die Ausbildung der Koppelvorrichtung 6 von besonderer Bedeutung. Dies wird im folgenden anhand der Ausführungsbeispiele nach den Fig. 3 und 4 näher erläutert.

In Fig. 3 ist eine Variante der Vorrichtung nach Fig. 1 dargestellt. Dabei sind gleiche Teile mit gleichen Bezugsziffern bezeichnet. Auf das Rad 2 ist ein Meßkopfhalter 11 aufgesetzt, der in dem dargestellten Ausführungsbeispiel kreuzförmig ausgebildet ist und insgesamt vier Ultraschallsender 3 trägt. Der Meßkopfhalter 11 ist mittels eines als im wesentlichen kegelstumpfförmiger, sich nach außen öffnender Korb ausgebildeten Adapters 11a, der am Rand seines vorderen Endes einen Gummiring 11b trägt, an die Felge des Rades 2 angedrückt. Der Meßkopfhalter 11 ist weiterhin über eine allgemein mit 6 bezeichnete Koppelvorrichtung mit dem Arm 5 verbunden, der durch einen am Grundgestell 10 angeordneten Druckluftzylinder 20 in axialer Richtung verschiebbar ist. Die Koppelvorrichtung 6 ist innerhalb eines Gehäuses 16 angeordnet und ist so ausgebildet, daß der Meßkopfhalter 11 drehbar, schwenkbar und in axialer Richtung verschiebbar mit dem Arm 5 verbunden ist. Hierzu ist auf der Mittelachse des Meßkopfhalters 11 ein Achszapfen 17 angeordnet, der sich vom Meßkopfhalter 11 aus gesehen nach außen kegelstumpfartig erweitert und diese Erweiterung ist durch eine Öffnung in der dem Meßkopfhalter 11 zugewandten Vorderseite 16a des Gehäuses hindurchgeführt. Die Basis der Erweiterung des Achszapfens ist dabei größer als die Weite der Öffnung in der Wand 16a, so daß bei einer Bewegung des Meßkopfhalters in Fig. 3 nach links die kegelstumpfförmige Erweiterung des Achszapfens 17 schließlich in der Öffnung festliegt und der Meßkopfhalter 11 dadurch am Gehäuse 16 festgehalten ist. An der Basisfläche des Achszapfens 17 ist eine abgerundete Spitze 17a auf der Mittelachse angeordnet, die einer Platte 18a gegenüberliegt, welche am vorderen Ende eines Rohrstückes 18b angeordnet ist. Zwischen der Platte 18a und der hinteren Innenwand 16b des Gehäuses 16 ist eine Druckfeder 19 angeordnet, die teilweise von dem Rohrstück 18b umgeben ist. Unter dem Druck der Feder 19 sitzt die Platte 18a auf der abgerundeten Spitze 17a auf und hat die Tendenz, den Meßkopfhalter 11 in Richtung auf das Rad 2 zu verschieben. Dadurch gerät der Adapter 11a über den Gummiring 11b in Kontakt mit der Felge des Rades 2. Der Abstand des Armes 5 vom Rad 2 ist dabei so bemessen, daß bei einem Kontakt zwischen dem Adapter 11a und dem Rad 2 der Achszapfen 17 sich frei in der Öffnung der Wand 16a bewegen kann. Dadurch kann der Meßkopfhalter 11 sich nicht nur unbehindert zusammen mit dem Rad 2 drehen, sondern er kann gegen die Wirkung der Druckfeder 19 axiale Bewegungen ausführen und er kann aufgrund der auf der Platte 18a aufsitzenden Spitze 17a Schwenkbewegungen ausführen.

Gegenüber dem Meßkopfhalter 11 ist eine Halterungsplatte 7 prüfstandsfest angeordnet, an der Ultraschsllempfänger 4 befestigt sind.

In Fig. 4 ist eine weitere Variante der Vorrichtung nach Fig.1 dargestellt. Auch hier sind gleiche Teile mit gleichen Bezugsziffern versehen. Aus der in Fig. 4 dargestellten Vorrichtung ist ersichtlich, daß der Meßkopfhalter 21 nicht unbedingt mit dem Rad 2 mitrotieren muß, um das Meßverfahren durchführen zu können.

Bei dieser Ausführungsform ist der kreuzförmig gestaltete, die Ultraschallsender 3 tragende Meßkopfhalter 21 mit einem über einen Gummiring 21b an der Felge des Rades 2 anliegenden Adapter 21a über ein Drehlager 21c so verbunden, daß das Rad 2 rotieren kann, ohne daß der Meßkopfhalter 21 an der Drehbewegung teilnimmt. Der Adapter 21a ist, ähnlich wie bei der Ausfuhrungsform nach Fig. 3, als im wesentlichen kegelstumpfförmiger, sich nach außen öffnender Korb ausgebildet, der am Rand seines äußeren, dem Rad zugewandten Endes einen Ring 21b aus gummielastischen Material aufweist. ·

Der Meßkopfhalter 21 ist über eine allgemein mit 6 bezeichnete Koppelvorrichtung mit dem Arm 5 verbunden, der mittels des Druckluftzylinders 20 in axialer Richtung verschiebbar ist. Die Koppelvorrichtung weist an der dem Meßkopfhalter 21 zugewandten Seite eine kardanische Aufhängung auf, die allgemein mit 22 bezeichnet ist. Diese kardanische Aufhängung 22 ist über eine Kreuzschienenplatte 23 mit dem Arm 5 verbunden.

Die kardanische Aufhängung 22 erlaubt es dem Meßkopfhalter 21, Schwenkbewegungen um eine in Fig. 4 vertikal in der Zeichenebene liegende Achse, sowie um eine senkrecht zur Zeichenebene stehende Achse auszuführen. Zu diesem Zweck besteht die kardanische Aufhängung aus einem inneren Ring 22d, der über Achsen 22a drehbar mit Ansatzstücken 21d am Meßkopfhalter 21 verbunden ist und der seinerseits über die Achsen 22b mit einem äußeren Ring 22c wiederum drehbar verbunden ist. Der äußere Ring 22c ist mit der Kreuzschienenplatte 23 verbunden, welche es ihrerseits dem Meßkopfhalter 21 erlaubt, lineare Bewegungen in zwei zueinander senkrechten Richtungen auszuführen. Dies geschieht in der Weise, daß eine erste Führung 23a der Kreuzschienenplatte 23 eine Verschiebung in einer Richtung vertikal in der Zeichenebene von Fig. 4 erlaubt, während eine zweite Führung 23b eine lineare Bewegung senkrecht zur Zeichenebene in Fig. 4 erlaubt.

Die Kombination der kardanischen Aufhängung 22 und der Kreuzschienenplatte 23 erlaubt es insgesamt, dem Meßkopfhalter 21 innerhalb gewisser Grenzen Schwenkbewegungen und lineare Bewegungen in Richtungen senkrecht zur axialen Richtung auszuführen.

Bei einer Drehung des Rades 2 dreht sich der Meßkopfhalter 21 zwar nicht mit, er folgt aber allen Schwenkbewegungen und allen Translationabewegungen senkrecht zur axialen Richtung, die der mit dem Rad 2 gekoppelte Adapter 21a ausführt. Es ist somit eine feste Zuordnung zwischen den am Meßkopfhalter 21 angeordneten Sendern 3 und den diesen Sendern gegenüberliegenden Punkten des Rades 2 gegeben. Wenn bei der Drehung des Rades 2 dieses eine Taumelbewegung ausführt, so folgt der Meßkopfhalter 21 dieser Taumelbewegung und die Abstände zwischen den Sendern 3 und den an der Halterungsplatte 7 befestigten Empfängern 4 verändern sich entsprechend. So kann bei einer Drehung des Rades 2 um beispielaweise 90° oder 180° mit der Ausführungsform nach Fig. 4, bei der die Sender 3 nicht mitrotieren, die Abstandsänderung zwischen den Sendern 3 und den Empfängern 4 genauso gemessen werden, wie bei der Ausführungsform nach Fig. 3, bei der die Sender 3 mitrotieren und nach der Drehung des Rades 3 jeweils ein anderer Sender 3 dem entsprechenden Empfänger 4 gegenüberliegt.

Entscheidend ist in beiden Fällen, daß eine feste Beziehung zwischen den am Meßkopfhalter 11 bzw. 21 angeordneten Sendern und den festen Punkten am Rad 2 besteht.

Im folgenden wird anhand von Fig. 5 das Meßverfahren zur exakten Vermessung der Radebenen näher erläutert.

In Fig. 5 ist in einer Teildarstellung die Vorrichtung gemäß Fig. 3 dargestellt, und zwar lediglich die Teile der Vorrichtung, die für die Erläuterung des Meßverfahrens von Bedeutung sind. Auf das Rad 2 ist der den Meßkopfhalter 11 tragende Adapter 11a aufgesetzt. Der Meßkopfhalter 11 trägt Ultraschallsender, von denen zwei Sender 3a und 3b in Fig. 5 dargestellt sind. Dem Meßkopfhalter 11 gegenüber liegt eine prüfstandsfeste Halterungsplatte 7, an der Ultraschallempfänger 4a und 4b angeordnet sind. In der in Fig. 5 dargestellten Stellung liegt der Ultraschallsender 3a gegenüber dem Ultraschallempfänger 4a und der Ultraschallsender 3b gegenüber dem Ultraschallempfänger 4b. Der Abstand des Ultraschallsenders 3a vom Ultraschallempfänger 4a ist mit S1 bezeichnet, während der Abstand des Ultraschallsenders 3b vom Ultraschallempfänger 4b mit S2 bezeichnet ist. Der Abstand der beiden Ultraschallempfänger 4a und 4b ist mit b bezeichnet. Wie aus der Zeichnung abzulesen, gilt nach geometrischen Gesetzen für den Neigungswinkel $\varphi$ der Radebene die Formel:

$$\varphi = \arctan (S2 - S1)/b.$$

Da die auftretenden Winkel im allgemeinen kleiner sind als 5°, kann diese Formel auch geschrieben werden:

$$\varphi \cong (S2 - S1)/b.$$

Das Meßverfahren sieht zwei Messungen vor, zwischen denen das Fahrzeugrad um zweckmäßigerweise 180° verdreht wird. Für die Messung werden die Ultraschallsender 3a und 3b impulsförmig erregt und mit bekannten elektronischen Methoden die Zeit gemessen, die vergeht, bis jeweils die Ultraschallempfänger 4a und 4b das von den Ultraschallsendern 3a und 3b abgegebene Signal empfangen. Aus den Laufzeiten und der Schallgeschwindigkeit werden die Entfernungen S1 und S2 ermittelt und der Neigungswinkel $\varphi$ der Radebene nach der oben angegebenen Formel berechnet. Nach der ersten Messung beider Entfernungen wird das Fahrzeugrad im oben angegebenen Sinne gedreht und nach der Drehung werden erneut beide Entfernungen gemessen. Mit Hilfe der in den verschiedenen Stellungen des Rades erhaltenen Ergebnisse läßt sich die Neigung der Radebene exakt bestimmen. Fehler, wie ein Felgenschlag oder ein schief aufgesetzter Adapter 11a, werden bei diesem Verfahren eliminiert.

**Patentansprüche**

1. Vorrichtung zur Vermessung der Radebenen von Kraftfahrzeugen während der Drehung des Rades (2) durch Messung des Abstandes eines oder mehrerer radfester Punkte von einer prüfstandsfesten Referenz und zur Vermessung der Änderung der Radebene bei Spur- bzw. Sturzeinstellung durch Messung der Abstände mehrerer radfester Punkte von einer prüfstandsfesten Referenz, bei der die Abstandsmessung berührungslos durch Ultraschall erfolgt und Schallsender (3) und/oder Schallempfänger (4) an einem Meßkopfhalter (1) angeordnet sind, der auf das Rad aufsetzbar ist und der über eine Koppelvorrichtung (6) an einem axial verschiebbaren Arm (S) schwenkbar angeordnet ist, dadurch gekennzeichnet, daß am Meßkopfhalter (11) ein an eine Felge des Rades (2) ansetzbarer Adapter (11a) fest angeordnet ist und die Koppelvorrichtung (6) eine in axialer Richtung zum Meßkopfhalter (11) gegen Federkraft verschiebbare Platte (18a) aufweist, auf der sich über eine Spitzenlagerung (17a) ein mit dem Meßkopfhalter (11) fest verbundener Achszapfen (17) abstützt.

2. Vorrichtung zur Vermessung der Radebenen von Kraftfahrzeugen während der Drehung des Rades (2) durch Messung des Abstandes eines oder mehrerer radfester Punkte von einer prüfstandsfesten Referenz und zur Vermessung der Änderung der Radebene bei Spur- bzw. Sturzeinstellung durch Messung der Abstände mehrerer radfester Punkte von einer prüfstandsfesten Referenz, bei der die Abstandsmessung berührungslos durch Ultraschall erfolgt und Schallsender (3) und/oder Schallempfänger (4) an einem Meßkopfhalter (21) angeordnet sind, der auf das Rad (2) aufsetzbar ist und der über eine Koppelvorrichtung (6) an einem axial verschiebbaren Arm (S) schwenkbar angeordnet ist, dadurch gekennzeichnet, daß am Meßkopfhalter (21) ein an eine Folge des Rades (2) ansetzbarer Adapter (21a) drehbar angeordnet ist und die Koppelvorrichtung (6) eine kardanische Aufhängung (22) und eine sich daran anschließende Kreuzschienenplatte (23) aufweist.

3. Vorrichtung nach Anspruch 1 oder 2, dadurch gekennzeichnet, daß der Adapter (11a, 21a) als im wesentlichen kegelstumpfförmiger, sich nach außen öffnender Korb ausgebildet ist, der am Rand seines äußeren, dem Rad (2) zugewandten Endes einen Ring (11b, 21b) aus gummielastischem Material aufweist.

4. Vorrichtung nach Anspruch 1, dadurch gekennzeichnet, daß der Achszapfen (17) des Meßkopfhalters (11) sich in Richtung auf die verschiebbare Platte (18a) kegelstumpfartig erweitert und durch eine Öffnung in einer fest mit dem Arm (5) verbundenen Stützplatte (16a) geführt ist, wobei der Durchmesser dieser Öffnung kleiner ist als der maximale Durchmesser des Achszapfens (17) und an einer der verschiebbaren Platte (18a) zugewandten Endfläche des Achszapfens (17) eine Spitze (17a) angeordnet ist.

5. Vorrichtung nach Anspruch 4, dadurch gekennzeichnet, daß die Koppelvorrichtung (6) innerhalb eines mit dem Arm (5) fest verbundenen Gehäuses (16) angeordnet ist, dessen vordere Wand (16a) die Stützplatte bildet und an dessen Rückwand (16b) sich ein Ende einer innerhalb des Gehäuses (16) angeordneten Druckfeder (19) abstützt, an deren anderem Ende die verschiebbare Platte (18a) angeordnet ist.

6. Vorrichtung nach Anspruch 2, dadurch gekennzeichnet, daß die kardanische Aufhängung (22) aus zwei ineinander angeordneten ringförmigen Bauteilen (22c, 22d) besteht, die gemeinsam gegenüber dem Meßkopfhalter (21) um eine parallel zur Ebene des Meßkopfhalters verlaufende erste Achse (22a) und gegeneinander um eine zur ersten Achse (22a) senkrecht stehende, ebenfalls parallel zur Ebene des Meßkopfhalters (21) verlaufende zweite Achse (22b) verschwenkbar sind und das äußere (22c) der beiden ringförmigen Bauteile in einer parallel zur ersten Achse (22a) verlaufenden Führung (23a) verschiebbar geführt ist, die an der Kreuzschienenplatte (23) angeordnet ist, welche ihrerseits an parallel zur zweiten Achse (22b) verlaufenden Führungen (23b) verschiebbar geführt ist.

**Claims**

1. Device for the measurement of wheel planes of motor vehicles during rotation of the wheel (2) by measuring the distance of one or more fixed points on the wheel from a fixed reference on the test stand, and for the measurement of the variation of the wheel plane upon the adjustment of the track and the camber by measuring the distances of a number of fixed points on the wheel from a fixed reference on the test stand, whereby the measurement of the distance is achieved without physical contact by means of ultrasonics, and whereby sound transmitters (3) and/or sound receivers (4) are attached to a measuring head holder (1) which is adapted to be placed on the wheel, and which, through a coupling device (6), is pivotally attached to an axially displaceable arm (5), characterized in that an adapter (11a) capable of being placed on a wheel rim (2), is rigidly secured to the measuring head holder (11), and that the coupling device (6) comprises a plate (16a) which is axially desplaceable towards the measuring head holder (11) against the force of a spring on which plate (16a) an axle journal (17) rigidly connected to the measuring head holder (11), is supported through a point bearing (17a).

2. Device for the measurement of wheel planes of motor vehicles during rotation of the wheel (2) by measuring the distance of one or more fixed points on the wheel from a fixed reference on the test stand, and for the measurement of the variation of the wheel plane upon the adjustment of the track and the camber by measuring the distances of a number of fixed points on the wheel from a fixed reference on the test stand, whereby the measurement of the distance is achieved without physical contact by means of ultrasonics, and whereby sound transmitters (3) and/or sound receivers (4) are attached to a measuring head holder (21) which is adapted to be placed on the wheel, and which, through a coupling device (6), is pivotally attached to an axially displaceable arm (5), characterized in that an adapter (21a) capable of being placed on a wheel rim (2), is rotatably secured to the measuring head holder (21), and that the coupling device (6) comprises a cardanic suspension (22) and a subsequent crossbar plate (23).

3. Device as claimed in claim 1 or 2, characterized in that the adapter (11a, 21a) is formed as a substantially frusto-conical, outwardly opening basket which, at the edge of its outer end facing towards the wheel (2), is provided with a ring (11b, 21b) made of rubber-elastic material.

4. Device as claimed in claim 1, characterized in that the axle journal (17) of the measuring head holder (11) frusto-conically widens towards the displaceable plate (16a) and, through an opening, is guided in a supporting plate (16a) which is rigidly secured to the arm (5), whereby the diameter of said opening is smaller than the maximum diameter of the axle journal (17), and whereby a point (17a) is provided at an end face of said axle journal (17) facing towards said displaceable plate (18a).

5. Device as claimed in claim 4, characterized in that the coupling device (6) is arranged within a casing (16) rigidly connected to the arm (5), the front wall (16a) of said casing (16) forming the supporting plate, and the rear wall (16b) of said casing (16) forming a support for one end of a compression spring (19) arranged within said casing (16) whereas the displaceable plate (16a) is arranged at the other end of said compression spring.

6. Device as claimed in claim 2, characterized in that the cardanic suspension (22) comprises two annular constructional components (22c, 22d) arranged one within the other, which components, together, are pivotable relative to the measuring head holder (21) about a first axis (22a) extending parallel to the plane of said measuring head holder, and which are pivotable relative to one another about a second axis perpendicular to said first axis and likewise extending parallel to the plane of the measuring holder (21), and that the outer one (22c) of the two annular constructional components is displaceably received in a guide (23a) extending parallel to said first axis (22a) which guide is arranged on the crossbar plate (23) which, in turn, is displaceably received in guides (23b) extending parallel to said second axis (22b).

**Revendications**

1. Dispositif pour mesurer la planéité des roues de véhicules automobiles pendant la rotation de la roue (2), par mesure de la distance entre un ou plusieurs points fixés sur la roue et un point de référence fixé sur le banc d'essai et pour mesurer la modification de la planéité de la roue lors du réglage de la voie ou le cas échéant du dévers par la mesure des distances entre plusieurs points fixés sur la roue et un point de référence fixé sur le banc d'essai, cette mesure de la distance s'effectuant sans contact par ultrasons et un émetteur d'ultrasons (3) et/ou un récepteur à ultrasons (4) étant disposé sur un support (1) de la tête de mesure qui peut être montée sur la roue et qui est disposée, au moyen d'un dispositif d'accouplement (6), de façon à pouvoir pivoter sur un bras (5) pouvant être déplacé axialement, caractérisé par le fait que sur le support (11) de la tête de mesure est fixé un adaptateur (11a) pouvant être monté sur la jante de la roue et par le fait que le dispositif d'accouplement (6) présente une plaque (18a) pouvant être déplacée contre la force d'un ressort axialement par rapport au support (11) de la tête de mesure, plaque (18a) sur laquelle s'appuie au moyen d'un palier pointu (17a), un pivot (17) relié de manière fixe au support (11) de la tête de mesure.

2. Dispositif pour mesurer la planéité des roues de véhicules automobiles pendant la rotation de la roue (2) en mesurant la distance entre un ou plusieurs points fixés sur la roue et un point de référence fixé sur le banc d'essai et pour mesurer la modification de la planéité des roues lors du réglage de la voie ou éventuellement du dévers par la mesure des distances entre plusieurs points fixés sur la roue et un point de référence fixé sur le banc d'essai, cette mesure de distance s'effectuant sans contact par ultrasons et un émetteur à ultrasons (3) et/ou un récepteur à ultrasons (4) étant disposés sur un support (21) de la tête de mesure, que l'on peut monter sur la roue (2) et qui est disposé, par un dispositif d'accouplement (6), de façon à pouvoir pivoter sur un bras (5) pouvant être déplacé axialement, caractérisé par le fait que sur le support (21) de la tête de mesure est disposé de manière rotative un adaptateur (21a) pouvant être monté sur la jante (2) de la roue et par le fait que le dispositif d'accouplement (6) présente une suspension (22) à cardans et une plaque (23) à barres croisées raccordées à ladite suspension à cardans (22).

3. Dispositif selon la revendication 1 ou 2, caractérisé par le fait que l'adaptateur (11a, 21a) est réalisé en forme de corbeille tronconique s'ouvrant vers l'extérieur qui présente au bord de son extrémité extérieure orientée vers la roue (2), une bague (11b, 21lb) en matériau élastique caoutchouté.

4. Dispositif selon la revendication 1, caractérisé par le fait que le pivot (17) du support (11) de la tête de mesure s'évase de manière tronconique en direction de la plaque (18a) pouvant être déplacée, et passe à travers un orifice pratiqué dans une plaque support (16a) reliée fixement au bras (5), le diamètre de cet orifice étant inférieur au diamètre maximal du pivot (17) et par le fait qu'une pointe (17a) est disposée sur une face d'extrémité du pivot (17a) orientée vers la plaque mobile (18a).

5. Dispositif selon le revendication 4, caractérisé par le fait que le dispositif d'accouplement (6) est disposé à l'intérieur d'un boîtier (16) relié de manière fixe au bras (5), boîtier (16) dont la paroi antérieure ((16a) constitue la plaque d'appui et sur la paroi arrière (16b) duquel s'appuie une extrémité d'un ressort de compression (19) disposé à l'intérieur dudit boîtier (16), tandis que sur l'autre extrémité dudit ressort (19) est disposée la plaque (18a) pouvant être déplacée.

6. Dispositif selon la revendication 2, caractérisé par le fait que la suspension (22) à cardans est constituée de deux éléments (22c, 22d) de forme annulaire disposés l'un à l'intérieur de l'autre, lesquels peuvent pivoter d'une part ensemble par rapport au support (21) de la tête de mesure, autour d'un premier axe (22) parallèle au plan du support de la tête de mesure, et d'autre part l'un par rapport à l'autre autour d'un deuxième axe (22b) perpendiculaire au premier axe (22a) lui aussi parallèle au plan support (21) de la tête de mesure, celui des deux éléments de forme annulaire qui est situé à l'extérieur (22c) pouvant être déplacé dans un guidage (23a) parallèle au premier axe (22a) et disposé sur la plaque (23) à barres croisées, laquelle quant à elle, est guidée de manière à pouvoir être déplacée sur des guidages (23b) parallèles au deuxième axe (22b).

# FIG.1

# FIG.2

FIG.3

0 132 527

FIG. 4

# FIG. 5